Europäisches Patentamt

European Patent Office

Office européen des brevets

(19)

(11) **EP 0 696 838 B1**

(12) **EUROPEAN PATENT SPECIFICATION**

(45) Date of publication and mention
of the grant of the patent:
**17.10.2001 Bulletin 2001/42**

(51) Int Cl.7: **H02M 1/12**, H02M 7/06,
H02M 7/155

(21) Application number: **95305291.7**

(22) Date of filing: **28.07.1995**

(54) **Multi phase bridge rectifier circuit with single phase input**

Mehrphasige Gleichrichterbrückenschaltung mit einphasigem Eingang

Circuit redresseur en pont multiphasé à entrée monophasée

(84) Designated Contracting States:
**BE CH DE DK ES GB IT LI NL SE**

(30) Priority: **29.07.1994 JP 17933294**
**29.12.1994 JP 34119794**

(43) Date of publication of application:
**14.02.1996 Bulletin 1996/07**

(73) Proprietor: **I-HITS LABORATORY**
**Yokohama (JP)**

(72) Inventors:
• **Suzuki,Yasunobu**
**Koganei-shi, Tokyo (JP)**

• **Teshima,Toru**
**Aoba-ku, Yokohama (JP)**

(74) Representative: **Tomlinson, Kerry John**
**Frank B. Dehn & Co.,**
**European Patent Attorneys,**
**179 Queen Victoria Street**
**London EC4V 4EL (GB)**

(56) References cited:
**WO-A-93/14557**        **FR-A- 2 353 988**

**Description**

The present invention relates to a Single phase input-Pseudo four phase full bridge rectifier circuit.

The invention is particularly, though not exclusively, useful for videos, audios, all information-communication equipments, electronic equipments such as computers, office automation machines like copy machines, air conditioners, cooking machines, lighting apparatus, industrial motor controllers, or switching power supplies for AC output devices like uninterruptible power supply units.

Until now, the switching power supply is generally used for videos, audios, all information or communication equipments, electronic equipments like computers, office automation machines like copy machines, air conditioners, cooking machines, lighting apparatus, industrial motor controllers, or switching power supplies for AC output equipments like uninterruptible power supply units.

The demand for switching power supplies is rapidly increasing as the improved switching for semiconductors or proprietary controller LSI and magnetic materials and condensers are having high frequency characteristics.

However, recently it is pointed out that harmonic current occasioned by switching power supplies causes electro-magnetic interference to commercial power lines.

In conjunction with this problem, it is also pointed out that the low power factor occasioned by switching power supplies causes waste of natural energy resources. These problems are now reaching the attention of advanced countries as a common problem.

Nowadays, the IEC (International Electrotechnical Commission) has decided to regulate harmonic current and low power factor occasioned by switching power supplies, and the guidelines by Japan are also required.

For example, concerning Regulation No. IEC1000-3-2 of the IEC Regulations, the object of regulations is divided into 4 classes, Class A for 3 phase input devices, Class B for motor tools, Class C for lighting apparatus and Class D for equipment having specialized/peak current waveforms not exceeding 600 watt. Therefore, electronic equipments except a kind of air conditioner and almost all AC input equipments are involved in Class D.

An especially important regulation in these regulations on harmonic current is on a single phase capacitor input type rectifier circuit, generally used for switching power supplies.

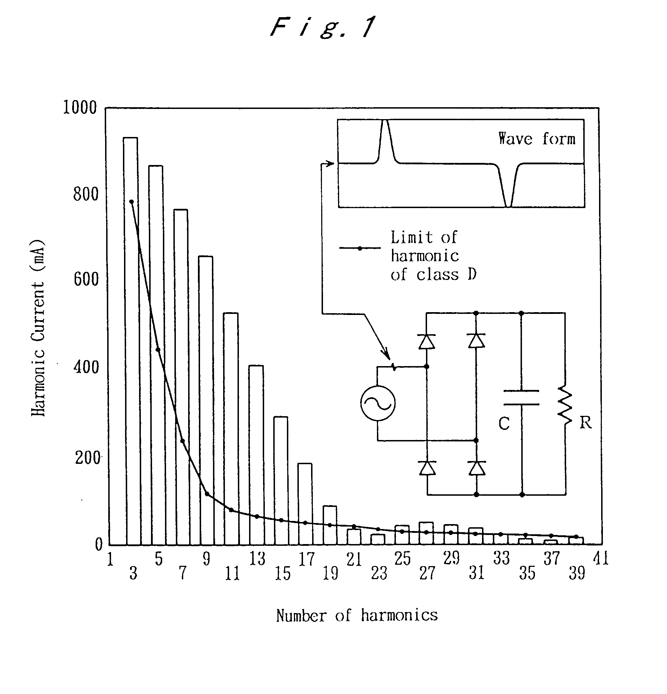

For example, Fig.1 shows that concerning a single phase capacitor input type rectifier circuit used for TV (230V, 230W) for the European market, the harmonic current value of all odd order harmonics from the third harmonic to the 19th harmonic largely exceeds the IEC Standard, (solid line in Fig.1).

Products with such a switching power supply are likely to be unable to be sold in future.

Until now, several circuits have been suggested as guidelines against the regulations on harmonic current. Among them, an input choke coil circuit, one transistor converter method (input capacitorless method), and active filter method are generally used.

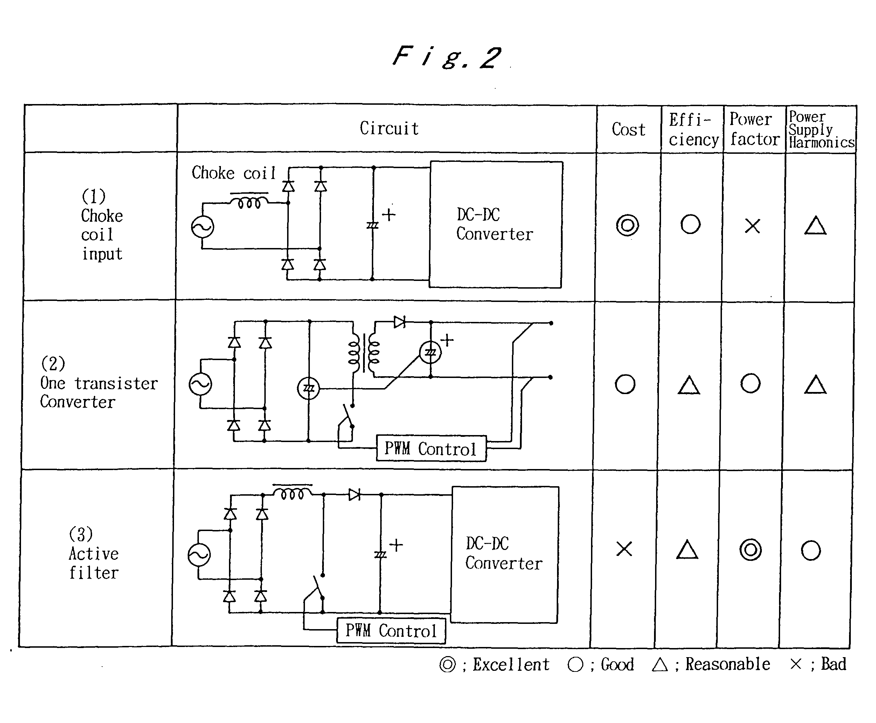

An input choke coil circuit has a circuit configuration as shown in Fig.2 (1) for example, and a choke coil is inserted in the AC input side. This configuration just meets the above-mentioned IEC Standard.

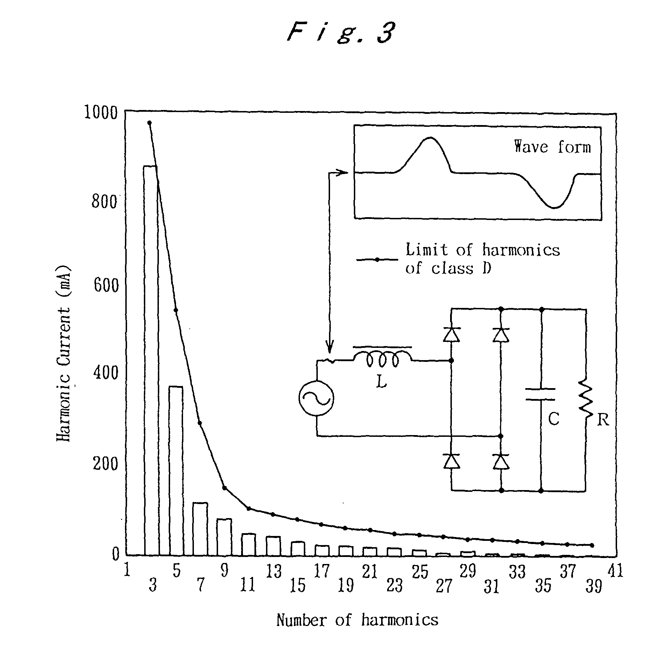

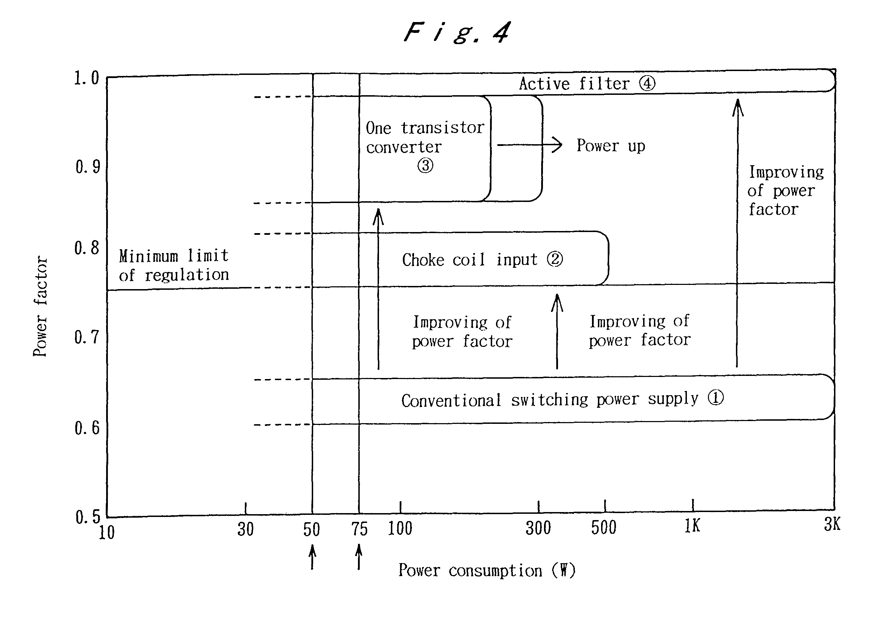

For example, when a choke coil is inserted into the input side of a single phase capacitor input type rectifier circuit used for TV (230V, 230W) for the European market as shown in Fig.3, harmonic current values of all odd order harmonics from the third harmonic to the 19th harmonic are lower than the IEC Standard (solid line in Fig.). However, the power factor of an input choke coil circuit is generally 0.75~0.8 as shown in Fig.4, for example, which meets the lowest value, 0.75, of the IEC Standard, but it is not enough. Still there is a high apparent power.

It is clear that the occurrence of harmonic current in an input choke coil circuit is caused by the charging current of a capacitor directly connected with the full bridge rectifier output. Accordingly, pulse width modulation (PWM) switching technology excluding a capacitor has been tried.

The types of circuit for pulse width modulation are divided into the one transistor converter method and the active filter method.

The one transistor converter method has a configuration as shown in Fig.2 (2) for example. Though it has some advantages as to cost, conversion efficiency, power factor, or power line harmonic, it also has a weak point that it is unable to produce output power when the AC input voltage instantaneous value is at around 0. Moreover, the one transistor converter method has a great weak point that noise at high-speed switching leaks to the AC power line side because of lack of a large capacitor at the power line side.

Accordingly, the switching power supply using the one transistor converter method is considerably limited as to use.

Whereas, the active filter method has a circuit configuration as shown in Fig.2 (3). This method has close to unity power factor, but needs another switching circuit to improve the power factor in addition to switching of a DC-DC converter. This makes the cost increase and makes conversion efficiency decrease by a few percent with the increase of high frequency noise.

Moreover, the above-mentioned input choke coil circuit method has a weak point that the device cannot be small and lightweight because of a heavy and large choke coil. If a circuit is used for a continuously and widely variable load machine like a computer controlled inverter type air conditioner, it is desirable for a circuit to keep a constant voltage under DC load variations.

As stated above, guidelines against current harmonic limitation and for improvement of power factor in the former switching power supplies accompany negative factors such as increase of cost, decrease of conversion efficiency or increase of size and weight.

WO93/14557 describes a controlled power supply which includes a bridge rectifier circuit. The preambles to the independent claims are based on that document.

The present invention aims to give a small and lightweight Single phase input-Pseudo four phase full bridge rectifier circuit which keeps a constant voltage under DC load variations, by overcoming the technical problems and improving radically the conversion efficiency, power factor and power line harmonic.

According to one aspect of the present invention, there is provided a bridge rectifier circuit comprising a pair of a.c. input terminals for receiving a single phase a.c. input voltage, a pair of d.c. output terminals for supplying a d. c. output voltage derived from the a.c. input voltage to a load connected to the d.c. output terminals, a series circuit connected between said a.c. input terminals and comprising at least a capacitor and an inductor connected together in series at a third terminal, and a four-phase full bridge rectifier, said a.c. input terminals and said third terminal being connected to inputs of said bridge rectifier and said d.c. output terminals being connected to outputs of said bridge rectifier, characterised in that said series circuit additionally comprises a bidirectional semiconductor switch connected at one end to one of said a.c. input terminals and at the other end to said inductor at a fourth terminal, said fourth terminal being additionally connected to an input of said bridge rectifier, wherein the four phase full bridge rectifier and semiconductor switch form a pseudo-four phase full bridge rectifier.

To solve the above problems, this invention provides a Single phase input-Pseudo four phase full bridge rectifier circuit having the following characteristic process:

First: One input terminal of single phase AC input terminals is called the first terminal, and another terminal is called the second terminal. Connect the circuit element directly connected with a bidirectional semiconductor switching element, a choke coil and a capacitor between the first terminal and the second terminal. The third terminal is the connection point of a capacitor and a choke coil of this circuit element, and the fourth terminal is the connection point of a choke coil and a bidirectional semiconductor switching element. Connect these four input terminals with four AC input terminals of 4 phase full bridge rectifier circuit, and connect DC load with plus and minus DC output terminals.

Second: By changing the phase angle or on-off ratio of the above bidirectional semiconductor switching element depending on the value of DC output voltage or DC output current, DC output voltage or DC output current is adjusted.

In preferred embodiments of the invention a DC-DC converter or a DC-AC inverter is provided as a DC load resistance.

Certain embodiments of the invention will now be described by way of example only and with reference to the accompanying drawings.

BRIEF DESCRIPTION OF THE DRAWINGS

Fig.1 shows the relation between the number and value of harmonic current of the conventional input capacitor type circuit.

Fig.2 shows circuit configurations having the typical harmonic reduction methods.

Fig.3 shows the relation between the number and value of harmonic current of the conventional input choke coil type circuit.

Fig.4 shows the relation between power consumption and power factor of the conventional circuits.

Fig.5 shows the circuit configuration of a Single phase input-Three phase full bridge rectifier circuit.

Fig.6 shows a configuration of a single phase AC circuit.

Fig.7 shows a configuration of a single phase Full bridge DC circuit.

Fig.8 shows a configuration of a conversion circuit from single phase to 3 phase.

Figs.9 (A)(B) show circuit configurations of Single phase input-Pseudo four phase full bridge rectifier circuits according to the invention.

Fig.10 shows another circuit configuration of a Single phase input-Pseudo four phase full bridge rectifier circuit according to the invention.

Fig.11 shows circuit configurations and waveforms of a fixed and variable inductance choke coil part.

Fig.12 shows a circuit configuration of a Single phase input-Three phase full bridge rectifier circuit.

Fig.13 shows voltage and current waveforms of the Single phase input-Three phase full bridge rectifier circuit.

Fig.14 shows voltage waveform at load variations of the Single phase input-Three phase full bridge rectifier circuit.

Fig.15 shows test values of the conventional circuits and the Single phase input-Three phase full bridge rectifier circuit.

Fig.16 shows testing values of the Invented Single phase input-Pseudo four phase full bridge rectifier circuit.

Figs.17 (A)(B) show circuit configurations of actual examples of Single phase input-Pseudo four phase full bridge rectifier circuits according to the invention.

Figs.18 (A) (B) (C) show circuit configurations of actual examples of the invented Single phase input-Pseudo four phase full bridge rectifier circuit applied to television receivers.

Fig.19 shows a circuit configuration of an actual example of the invented Single phase input-Pseudo four phase full bridge rectifier circuit applied to a motor controller.

Fig.20 shows a circuit configuration of an actual example of the invented Single phase input-Pseudo four phase full bridge rectifier circuit applied to an uninterruptible power supply.

(I) Single phase input-Three phase full bridge rectifier circuit

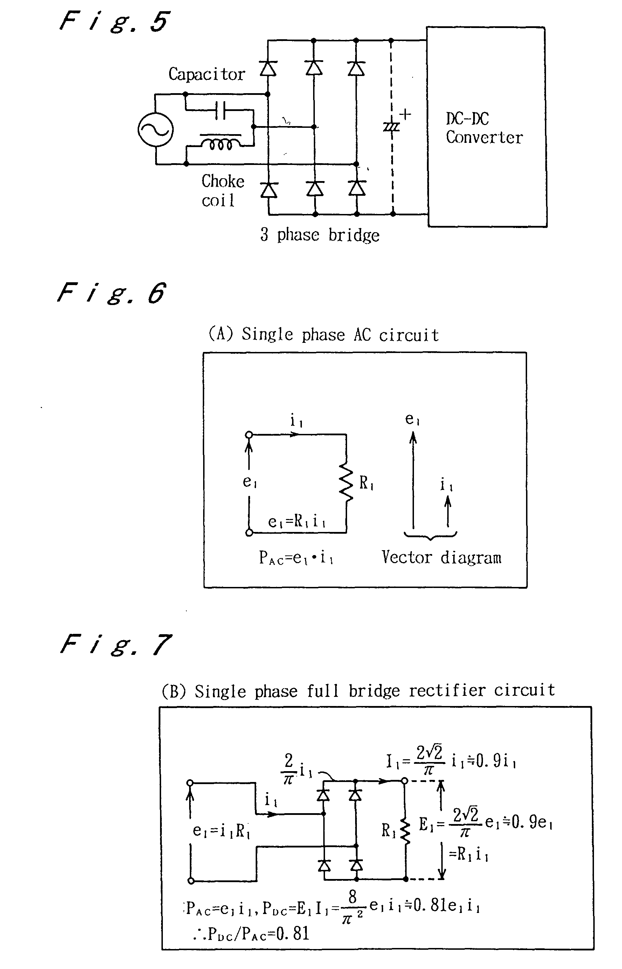

Fig.5 shows one example of Single phase input-Three phase full bridge rectifier circuit that is not in accordance with the present invention as claimed, but is described to aid understanding of the present invention. Excellent operation efficiency such as high conversion efficiency or high power factor is given by using this circuit.

Below we compare the conversion efficiency of the invented Single phase input-Three phase full bridge rectifier circuit and the conventional single phase full bridge rectifier circuit based upon the actual calculation.

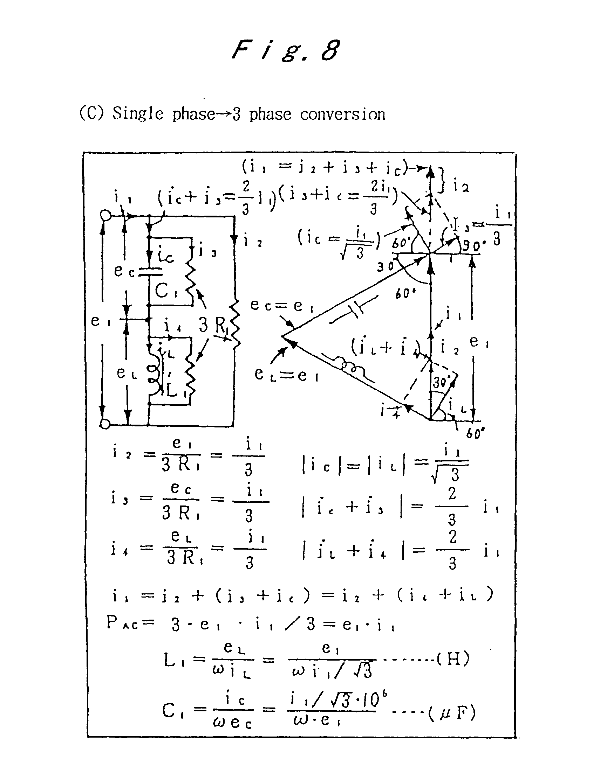

To compare with the invented Single phase input-Three phase full bridge rectifier circuit, a single phase AC circuit (Fig.6), a single phase full bridge rectifier circuit (Fig.7) and a single to 3 phase conversion circuit (Fig.8) are shown for example.

Voltage, current and power of each circuit are defined as follows:

In the single phase AC circuit in Fig.6.

| $e_1$ is | AC input voltage |
| $i_1$ is | AC input current |
| $P_{AC}$ is | AC input power |

When the same AC input voltage ($e_1$), AC input current ($i_1$) and AC input power ($P_{AC}$) as of Fig.6 are used for a single phase full bridge rectifier circuit (Fig.7), DC output voltage ($E_1$), DC output current ($I_1$) and DC output power ($P_{DC}$) are as shown in Fig.7.

As a result, it is clear that theoretically, DC output power ($P_{DC}$) does not exceed 81% of AC input power ($P_{AC}$). This means that the energy of the harmonic content involved in single phase full bridge output waveforms is 19% and is not used as DC output power.

Next we refer to a single to 3 phase conversion circuit shown in Fig.8 taking account of a single phase AC circuit and a single phase full bridge rectifier circuit.

This single to 3 phase conversion circuit is a circuit to produce different phase voltage from the vector of AC input voltage ($e_1$) at the connection point of $C_1$ and $L_1$ by connecting a series circuit of a capacitor ($C_1$) and a choke coil ($L_1$) between two AC input terminals as shown in Fig.8.

In this single to 3 phase conversion circuit, to equalize the sum of 3 phase load power with single phase power $e_1$, $i_1$ of a single phase AC circuit under the condition that AC input voltage ($e_1$) and AC input current ($i_1$) is same as the single phase AC circuit and the single phase full bridge rectifier circuit shown in Fig.6 and Fig.7, the equation is as follows when $i_2$, $i_3$ and $i_4$ of Fig.8 is $i_1/3$.

$$\left. \begin{array}{l} 3phase \ x \ \dfrac{i_1}{3} \ x \ e_1 \ = \ i_1 \cdot e_1 \\ whereby, \ 3e_1/i_1 \ = \ 3R_1 \end{array} \right\} \quad \ldots\ldots(1)$$

Load resistance per phase = $3e_1/i_1$ = $3R_1$

   Load resistance per phase = $3 \ e_1 /i_1$ =$3 \ R_1$

At first, the value of a capacitor ($C_1$) and a choke coil ($L_1$) of this single to 3 phase conversion circuit is fixed to produce 3 phase AC.

When the AC voltage vector diagram of a triangle is shown as per Fig.8, voltage vectors of $L_1$ and $C_1$ are $e_L$ and $e_c$. At this time, the current vector of $i_3$ has the same phase as $e_c$ because the load is resistive, and current of $i_c$ is advanced 90° from the vector of $e_c$ because it is capacitive due to AC theory.

When the absolute value is fixed as:

$\sqrt{3}$ times the absolute value of $i_3$

That is; $\sqrt{3}i_3$

Equation (2) is:

$$|i_c + i_3| = \sqrt{(\sqrt{3}i_3)^2 + i_3^2} = 2\,i_3 = \frac{2}{3}\,i_1 \qquad (2)$$

In the same way, when the absolute value $i_L$ is fixed as below:

$\sqrt{3}$ times the absolute value $(|i_1/3|)$ of $i_4$

Equation (3) is:

$$|i_L + i_4| = \sqrt{(\sqrt{3}i_4)^2 + i_4^2} = 2\,i_4 = \frac{2}{3}i_1 \qquad (3)$$

It is clear from the vector diagram, that the parallel composite current $(2i_1/3)$ of $C_1$ and $3R_1$ and the parallel composite current $(2i_1/3)$ of $L_1$ and $3R_1$ have the same phase as the single phase AC input voltage $(e_1)$, or power factor 1.

Then, the equivalent 3 phase AC circuit can be composed.

Moreover, the current vector of $i_2$ only has a resistive component and has the same phase as the single AC input voltage $(e_1)$. Single phase AC input current $(i_1)$ is shown as the following equation (4) by arithmetically adding $C_1$ and $3R_1$ to component current $i_2$, or $L_1$ and $3R_1$ to the component current $i_2$:

Equation (4) is;

$$i_1 = i_2 + (i_3 + i_c) = i_2 + (i_4 + i_L) = \frac{i_1}{3} + 2\frac{i_1}{3} \qquad (4)$$

As AC input power is $e_1.i_1$ and AC output power is 3 phase, $e_1.i_1/3 = e_1i_1$, the same power consumption as $P_{AC} = e_1i_1$ of a single phase AC circuit is realized by a 3 phase circuit.

Next we fix the voltage and the current of each part of the invented Single phase input-Three phase full bridge rectifier circuit.

When the condition is the same as the single phase full bridge rectifier circuit of the above Fig.7, DC output voltage $(E_3)$, DC output current $(I_3)$, equivalent output load resistance $(R_3)$, AC current running through one arm of diode $(i_5)$, 3 phase bridge AC input current $(i_6)$, AC input current $(i_7)$, choke coil current $(i_8)$, capacitor current $(i_9)$, AC input power $(P_{AC})$ and DC output power $(P_{DC})$ are shown as the following equation (5) :

$$E_5 = 3\frac{\sqrt{2}}{\Pi}\,e_1 = \left(\frac{3}{2}\right)\left(2\frac{\sqrt{2}}{\Pi}e_1\right) = \frac{3}{2}E_1 \fallingdotseq 1.35e_1$$

$$I_3 = \frac{E_1\,I_1}{E_3} = \frac{2}{3}\,I_1 = \left(\frac{2}{3}\right)\left(\frac{2\sqrt{2}}{\Pi}\,i_1\right) = \frac{4\sqrt{2}}{3\Pi}\,i_1 = 0.6\,i_1$$

$$R_3 = \frac{E_5}{I_3} = \left(\frac{3}{2}\right)E_1 \Big/ \left(\frac{2}{3}\right)I_1 = \left(\frac{3}{2}\right)^2\frac{E_1}{I_1} = 2.25\,R_1$$

$$i_5 = \frac{I_3}{\sqrt{3}} = \frac{2}{3\sqrt{3}}I_1 = \frac{4\sqrt{2}}{3\sqrt{3}\Pi}i_1 \fallingdotseq 0.346\, i_1$$

$$i_6 = \sqrt{2}i_5 = \sqrt{\frac{2}{3}}I_s = \frac{8}{3\sqrt{3}\Pi}i_1 \fallingdotseq 0.49\, i_1$$

$$i_7 = \sqrt{3}i_6 = \frac{8}{3\Pi}\, i_1 \fallingdotseq 0.85\, i_1$$

$$i_8 = i_9 = \frac{i_7}{\sqrt{3}} = i_6 \fallingdotseq 0.49\, i_1$$

$$P_{AC} = e_1 \cdot i_7 = e_1 \cdot 0.85\, i_1 = 0.85\, e_1\, i_1$$

$$P_{DC} = E_3\, I_3 = \left(\frac{3\sqrt{2}}{\Pi}\, e_1\right)\left(\frac{4\sqrt{2}}{3\,\Pi}\, i_1\right) = \frac{8\, e_1\, i_1}{\Pi^2} = 0.81\, e_1\, i_1$$

$$\dots\dots(5)$$

That is, while the former single phase full bridge rectifier circuit needs $e_1.i_1$ of AC input power to get DC output power $0.81.e_1.i_1$ the Single phase input-Three phase full bridge rectifier circuit can give equivalent DC output to AC input power $0.85.e_1.i_1$.

This means 15% reduction of power consumption from the former single phase full bridge rectifier circuit and approx. 100% power factor is maintained. And it also has an advantage that the harmonic component leaked to the AC input power line side is sufficiently reduced.

Fundamental reasons for these advantages are because of the feasibility of DC conversion with little harmonic component and the feasibility of equivalent conversion efficiency to a 3 phase AC circuit by using a 3 phase full bridge rectifier.

This means that when the Single phase input-Three phase full bridge rectifier circuit is used for the power supply of a single phase electric apparatus having a constant load such as the present TV, personal computers or video tape recorders, approx. 15% reduction of single phase AC power energy resource on global basis without harmonic interference to power lines is possible.

Moreover, under the operation principle of the above-mentioned Fig.8, apparatus for 3 phase is able to operate with equivalent conversion efficiency even by using a single phase circuit.

The Single phase input-Three phase full bridge rectifier circuit needs one additional AC capacitor, one choke coil and 2 elements of rectifier diode. The capacity of a choke coil ($L_2$) which is a main element of high cost is shown as $0.49.e_1.i_1$ (VA) in equation (5) and below-mentioned equation (7), which is equivalent to $1/2 = 0.25.e_1.i_1$ of equivalent capacity of transformers, or equivalent to 1/4 of the capacity of single phase full bridge insulated transformers.

The AC capacitor ($C_2$) of this invention is 15 µF, 100 WV when DC output power is about 80 W, which is not expensive like 2 elements of diode.

If the choke coil and smoothing electrolytic capacitor of the conventional type shown in the above Fig.2, cost the same as $C_2$ and $L_2$ of the described circuit, the described circuit needs only 2 additional elements of rectifier diode to the choke coil inserted circuit, the cost of which is between one transistor converter type and choke coil input type shown in the above Fig.2.

(II) Single phase input-Pseudo four phase full bridge rectifier circuit

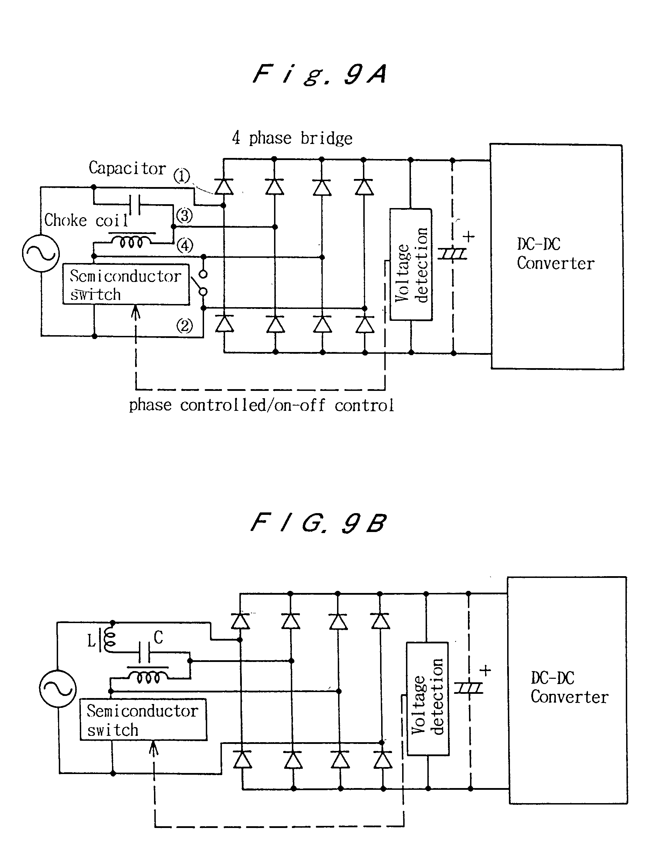

The resultant impedance made with a bidirectional semiconductor switching element and a choke coil of Fig. 9 is equivalent to the impedance of a choke coil of Single phase input-Three phase full bridge rectifier circuit of Fig.5.

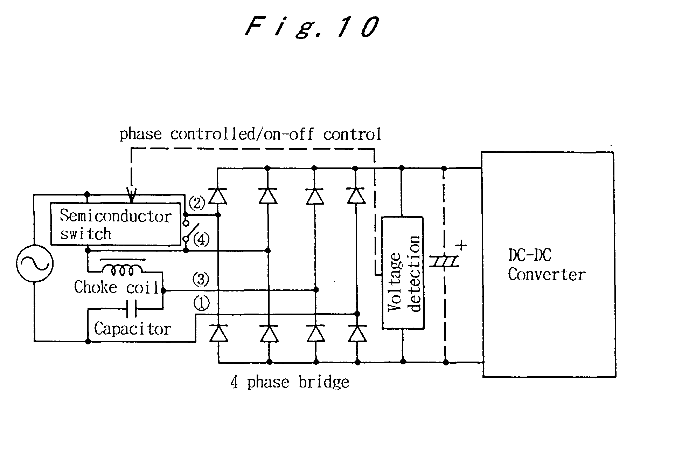

This circuit is able to keep constant voltage control against load variation as the resultant inductance in a choke coil is changeable by using a bidirectional semiconductor switching element. The circuit of Fig.10 has the same operation principle and capacity as the circuit of Fig.9.

Figs.9 (A)(B) show examples of circuit configurations of the invented single phase input-Pseudo four phase full bridge rectifier circuits. Figure 9 (A) shows the principle of the circuit, Fig.9 (B) shows a practical application.

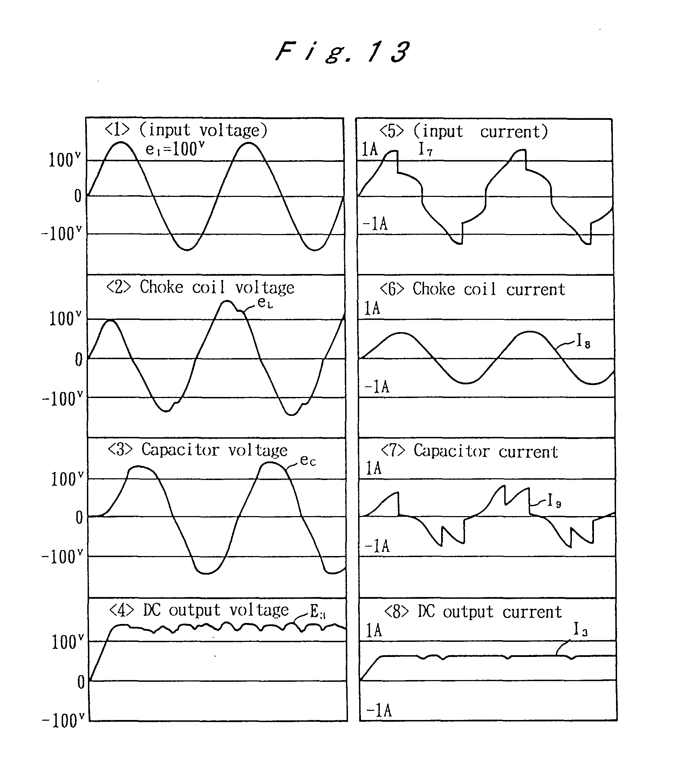

Where a small choke coil is inserted with capacitor C, this acts to smooth the capacitor current indicated in Fig.13. Therefore, AC input current harmonic component is sufficiently reduced.

Fig.10 shows an example circuit configuration of a Single phase input-Pseudo four phase full bridge rectifier circuit, where the order of connection among a bidirectional semiconductor switching element, a choke coil and a capacitor of the circuit of Figs.9 (A)(B) are replaced.

The resultant impedance made with a bidirectional semiconductor switching element and a choke coil of Figs. 9 (A)(B) is equivalent to the impedance of a choke coil of the Single phase input-Three phase full bridge rectifier circuit of Fig.5.

This circuit is able to keep constant voltage control against load variations as the resultant inductance in a choke coil is changeable by using a bidirectional semiconductor switching element. The circuit of Fig.10 has the same operation principle and capacity as the circuit of Fig.9.

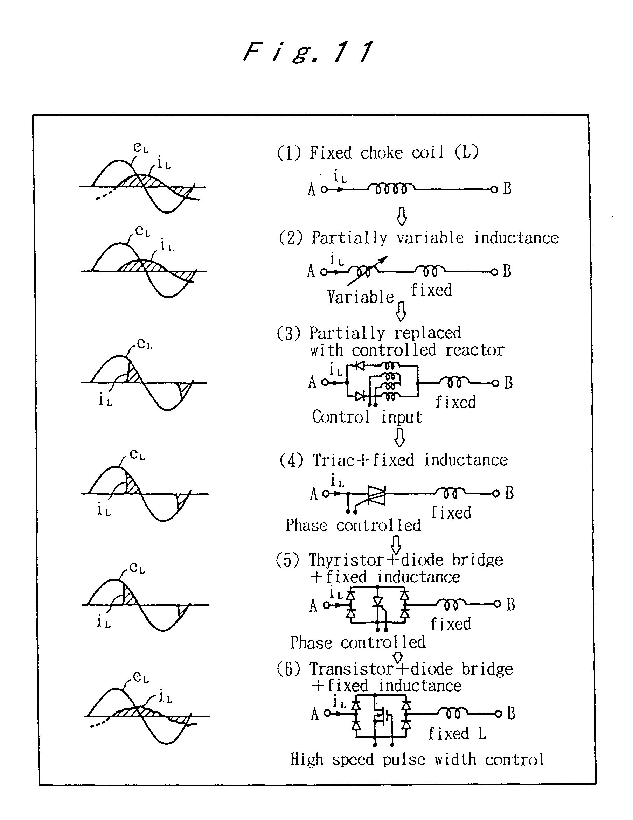

Fig.11 shows an example circuit configuration of a choke coil part. Fig.11 (1) shows the existing circuit configuration with a choke coil where the inductance is fixed. Fig.11 (2) shows an example circuit configuration having variable inductance. In this circuit, some inductance is fixed and other inductance is variable.

The constant voltage or constant current is automatically controlled by using a bidirectional semiconductor switching element for this variable inductance.

There are the following circuits which have variable inductance:

1) A circuit having a saturable reactor as a control device for variable inductance
2) A circuit having a phase controlled thyristor and a diode bridge
3) A circuit having a transistor and a diode bridge
4) A circuit having a triac

Fig.11 (3) shows an example configuration of the circuit having a saturable reactor. Though this circuit is smoothly and excellently able to control constant voltage, it is not useful at present because of its big size and weight, and high production cost.

Fig.11 (5) shows an example configuration of the circuit having a phase controlled thyristor and a diode bridge. This circuit has an equivalent control efficiency to the above-mentioned circuit with a saturable reactor, but also has weak points such as high heating and degradation of efficiency because of voltage drop in the semiconductors when switching ON amounting to 2.5 ~ 3 V (1V at a phase controlled thyristor, 1.5 ~ 2 V at a diode bridge).

Fig.11 (6) shows an example configuration of the circuit having a transistor and a diode bridge. This circuit is a high speed pulse width control circuit, which is more smoothly able to control constant voltage by narrowing the pulse width against the increase of load resistance, or the decrease of load current. However, it has the same weak point as the one transistor converter type and active filter type such as high frequency electromagnetic wave interference by high speed switching.

Fig.11 (4) shows an example configuration of a circuit having a triac. This circuit has equivalent control efficiency to a circuit with a saturable reactor, but has not the weak points like the above-mentioned circuits. The current running through this circuit is extremely little when the phase angle of a triac is close to 180 degrees. Not only its equivalent inductance is large, but also it has pulsive current whose phase is delayed 90 degree on average from the phase of the input voltage.

The amount of the fixed inductance of this circuit can be reduced to 1/3 ~ 1/5 of the original inductance of the circuit shown in Fig.11 (1), that is, the inductance in a choke coil used by the existing circuit. Consequently, it is clear that the circuit having a triac is the most suitable for a bidirectional semiconductor switching element to control a variable inductance.

Accordingly, the preferred Single phase input-Pseudo four phase full bridge rectifier circuit uses variable inductance which consists of a bidirectional semiconductor phase controlled element and a fixed part of choke coil the inductance of which makes a small and lightweight component. Moreover, more smooth and excellent automatic constant voltage control can be given by using a triac as a bidirectional semiconductor phase controlled element.

Based on the above configuration and characteristics, the Single phase input Pseudo four phase full bridge rectifier circuit can constitute a 4 phase full bridge rectifier circuit which can realize the characteristics of an unbalanced 3 phase AC full bridge rectifier having an inferior waveform to a full bridge rectified waveform of a normal 3 phase AC input connected with a choke coil, a capacitor and 3 phase full bridge rectifier elements or 4 phase full bridge elements, whose value is away from the best value depending on the load on the output terminals.

It also can constitute a single phase input 4 phase full bridge rectifier circuit having a mechanism to cut off the above invented capacitor or choke coil circuit corresponding to shutting down the main load circuits without a partial function circuit, when an electronic apparatus as DC main load is in an idle condition.

More detailed explanation for this invention is given below by showing working examples.

Example 1

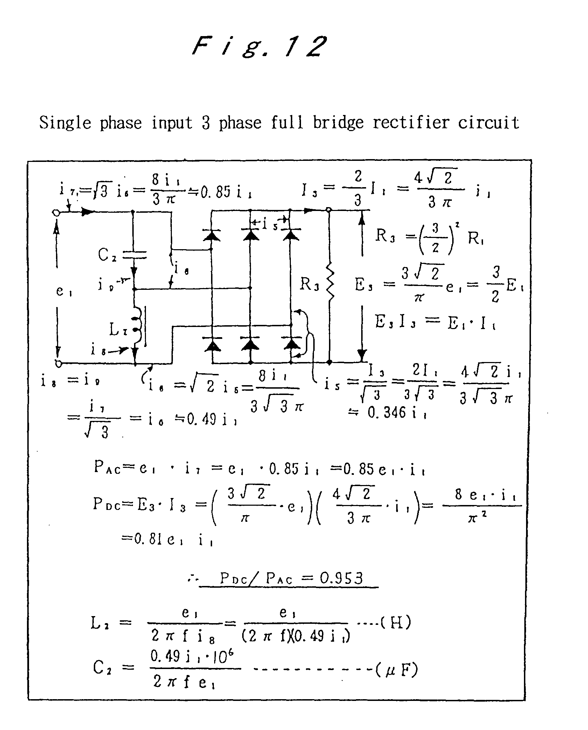

The Single phase input-Three phase full bridge rectifier circuit shown in Fig. 12 which is not in accordance with the present invention as claimed is confirmed by computer simulation and experiment to demonstrate the operation of the illustrative Single phase input-Three phase full bridge rectifier circuit.

At first, the value of $L_2$ ,$C_2$ and $3R_3$ is fixed depending on $i_8$ and $i_9$ of the above equation (5). For comparison, voltage, current and power of a single phase full bridge rectifier circuit is hypothetically assumed as the following equation (6):

$$ACSide \begin{pmatrix} e_1 & = & 100V \\ i_1 & = & 1A \\ P_{AC} & = & 100W \\ R & = & 100\Omega \end{pmatrix} DCSide \begin{pmatrix} E_1 & = & 90V \\ I_1 & = & 0.9A \\ P_{DC} & = & 81W \\ R_1 & = & 100\Omega \end{pmatrix} \quad \cdots\cdots(6)$$

To obtain the equivalent DC output power, when the AC input power frequency is 50 Hz, $L_2$ and $C_2$ of the above Fig. 12 and $i_8$, $i_9$ and $e_1$ of equation (5) is as follows:

$$\omega L_{2.} i_8 = e_1$$

Whereby,

$$L_2 = \frac{e_1}{2\pi f i_8} = \left(\frac{100}{100\pi}\right)\left(\frac{1}{0.49 \times 1\,A}\right) \fallingdotseq 649mH$$

$$\omega C_{2.} e_1 = i_9$$

Whereby,

$$C_2 = \frac{0.49\,i_1}{2\Pi f e_1} = \frac{0.49 \times 1 A \times 10^6}{100\Pi \times 100}\,(\mu f) = 15.6\ \mu F \tag{7}$$

$$R_3 = \left(\frac{3}{2}\right)^2 R = 2.25 \times 100\ \Omega = 225\ \Omega$$

And,

$$E_3 = 1.5\,E_1 = 1.35\,e_1 = 135\ V$$

$$I_3 = \frac{2}{3}I_1 = \frac{2}{3} \times 0.9\ A = 0.6\ A$$

$$P_{DC} = E_3.I_3 = 0.81e_1.I_1 = 81 \text{ W}$$

$$P_{AC} = e_1 \cdot 0.85i_1 = 85 \text{ W} \tag{8}$$

Voltage and current waveforms of Single phase input-Three phase full bridge rectifier circuit obtained by Fast Fourier transform are as shown in Fig. 13 when the constant of the above equation (7) is the base.

<1> of Fig.13 shows a waveform when single phase AC power supply voltage ($e_1$) (Effective value 100V) is built up from zero phase of a sine wave.
<2> shows voltage ($e_L$) of a choke coil ($L_2$).
<3> shows voltage ($e_c$) of a capacitor ($C_2$).
<4> shows DC output voltage ($E_3$).
These Figures show that $e_L$ advances 60° from $e_1$, and $e_c$ delays 60° from $e_1$, which demonstrates the occurrence of equivalent 3 phase voltage.
<5> ~ <8> of Fig.13 show the corresponding current waveforms of each part. <5> shows AC input current ($i_7$), <6> shows AC current ($i_8$) of a choke coil ($L_2$), <7> shows AC current ($i_9$) of a capacitor ($C_2$), and <8> shows DC output current ($I_3$).

According to Fig.13<4>, ripple voltage is a little larger than the waveform of a normal 3 phase full bridge. It is supposed to be caused by that AC current ($i_9$) running through a capacitor ($C_2$) of Fig.13<7> is not a sine wave and largely changed at the switching time of current of 3 phase diode, whereby, it includes a lot of 5th harmonic.

And, as the current waveform of Fig. 13<5> is near to the AC current waveform of a general 3 phase full bridge rectifier circuit, it is also supposed that input power factor of the invented Single phase input-Three phase full bridge rectifier circuit is about Unity.

When the ripple voltage involved in the DC output voltage is reduced by changing the value of a capacitor ($C_2$), inductance of a choke coil ($L_2$) has the calculated value from the theoretical value when assuming sine wave operation, and a capacitor ($C_2$) has its best value (minimum value of ripple voltage) at 90% of theoretical value.

For example, when a high frequency DC-DC converter or a DC-AC inverter for pulse width control is connected after this circuit, some level of ripple is considered to be input voltage variation and it is possible to achieve sufficient smoothing by constant voltage control. It is also improved by insertion of a simple filter.

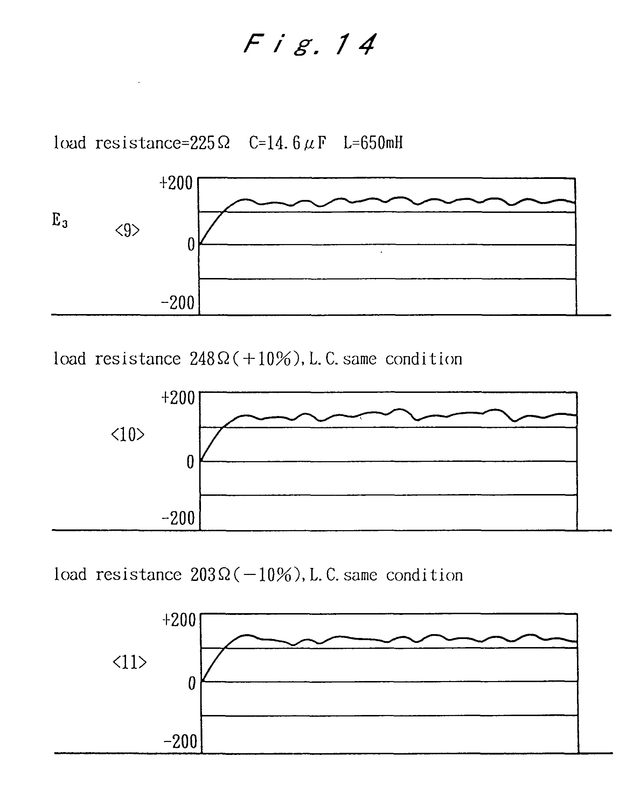

Fig. 14<9> ~ <11> show the variation range of a 3 phase full bridge output waveform when the load resistance value changes by +10%, -10% on the hypothesis that the load controls constant voltage or constant current against input voltage variation. Fig. 14<9> shows DC output voltage ($E_3$) in this case, which has rather larger ripple voltage than a perfect 3 phase full bridge output but fully smaller than single phase full bridge and 3 phase half bridge. This is a small matter for actual use.

Furthermore, <10> and <11> show that ripple or average values of output voltage are different from the best value of <9>, which is also a small matter for actual use.

Equivalent 3 phase full bridge rectifier operation is confirmed by using computer simulation and actual experiments, and the correctness of simulation is confirmed.

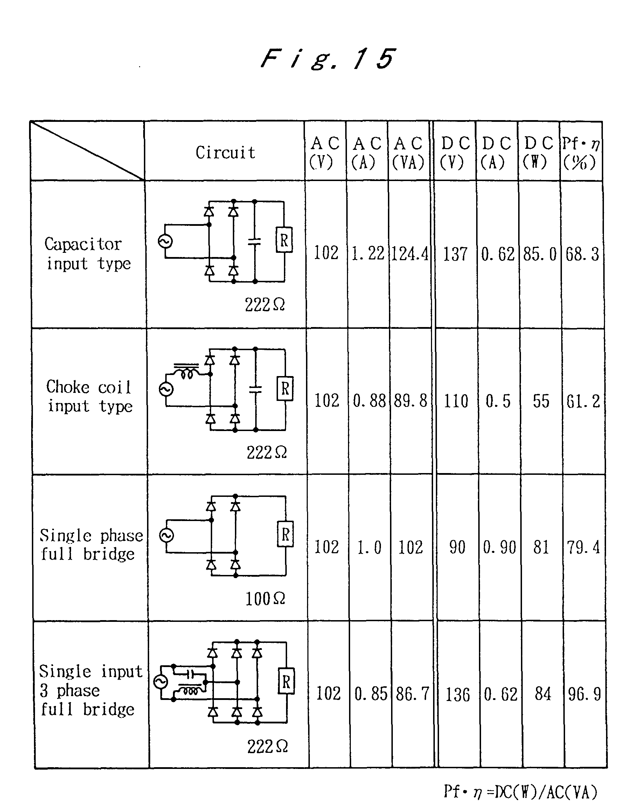

And, Fig.15 shows the result of a test to demonstrate the Single phase input-Three phase full bridge rectifier circuit. This result demonstrates conformity of theoretical value and measurement value in spite of a slightly leading error of the measurement instrument.

Example 2

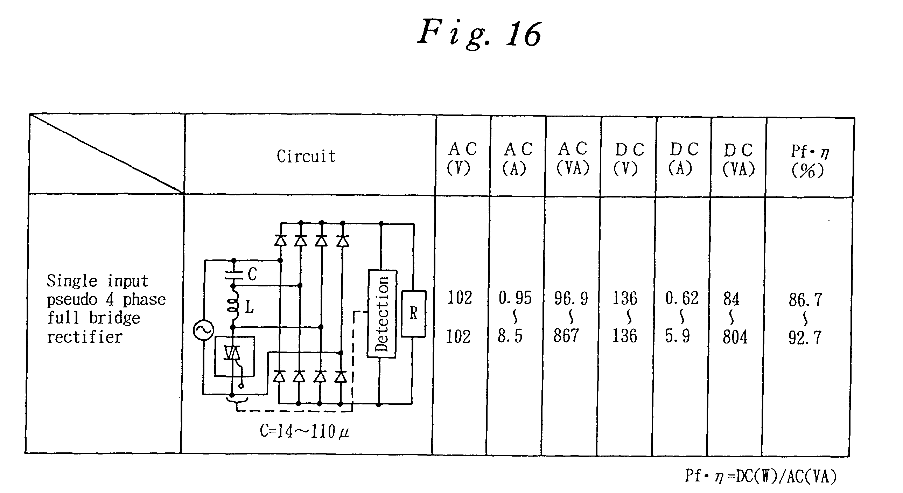

The test result to demonstrate the invented Single phase input-Pseudo four phase full bridge rectifier circuit is as shown in Fig.16. The result shows the conformity of theoretical value and measurement value in spite of a slight difference by a measurement instrument.

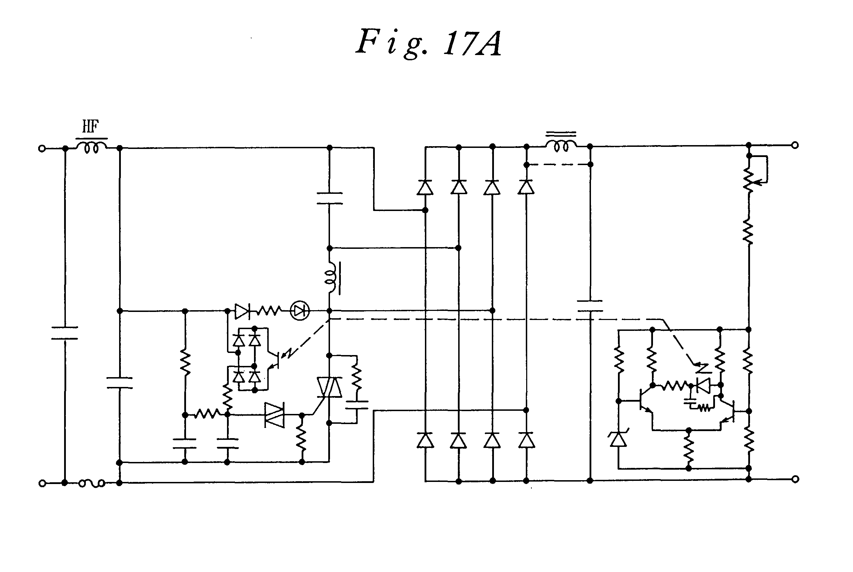

Figs.17 (A)(B) show example configurations of the invented Single phase input-Pseudo four phase full bridge rectifier circuit used for this test.

Fig.17 (A) shows an example configuration of a circuit for constant voltage control over DC load variation.

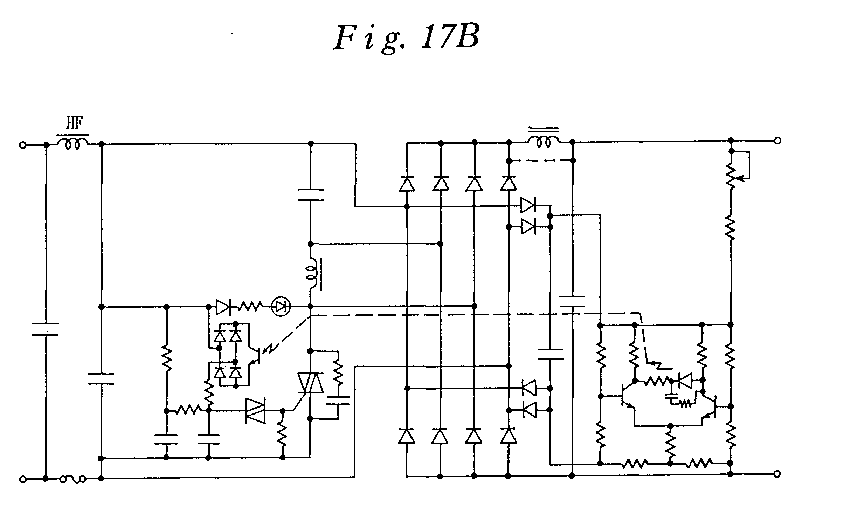

Fig.17 (B) shows an example configuration of a circuit to improve power factor and a constant voltage control circuit is not involved.

Example 3

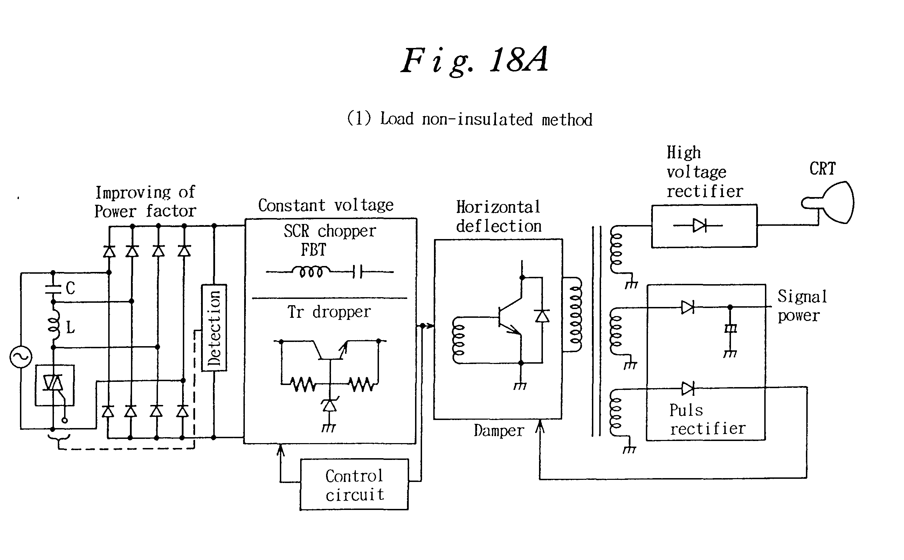

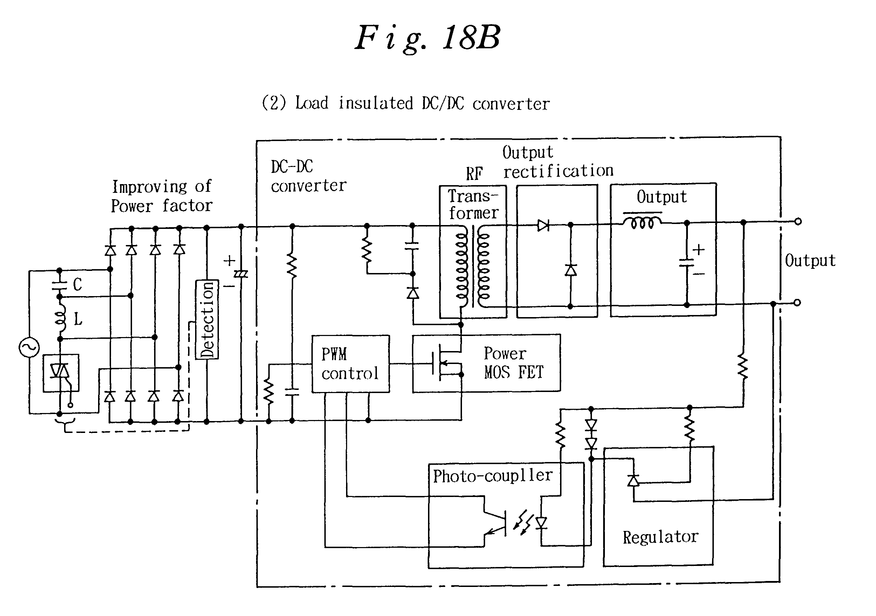

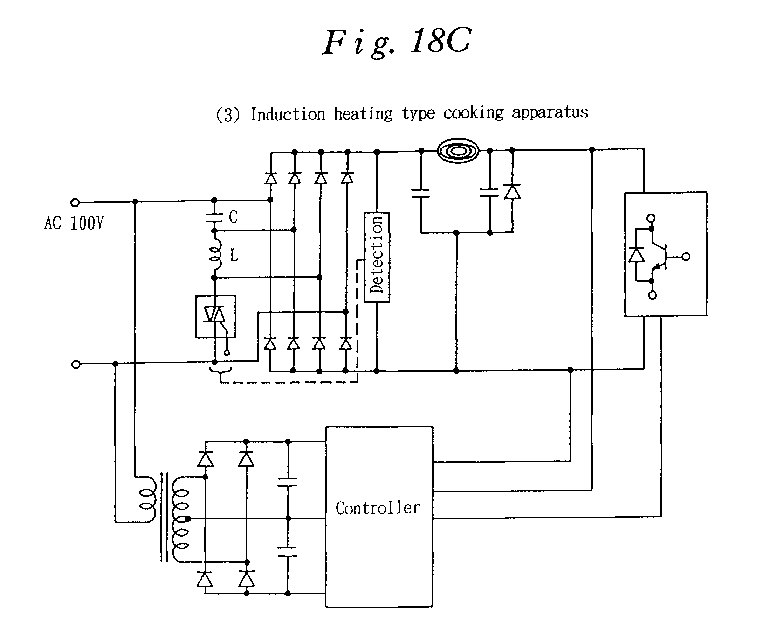

Figs.18 (A)(B) and (C) show example configurations of the invented Single phase input-Pseudo four phase full bridge rectifier circuit when applied to a conventional DC-DC converter.

By replacing the conventional single phase full bridge with a equivalent 4 phase full bridge, effective AC input power is reduced by about 10%, approx. 95% ~ 99% power factor is maintained and power line harmonic energy is extremely reduced.

Example 4

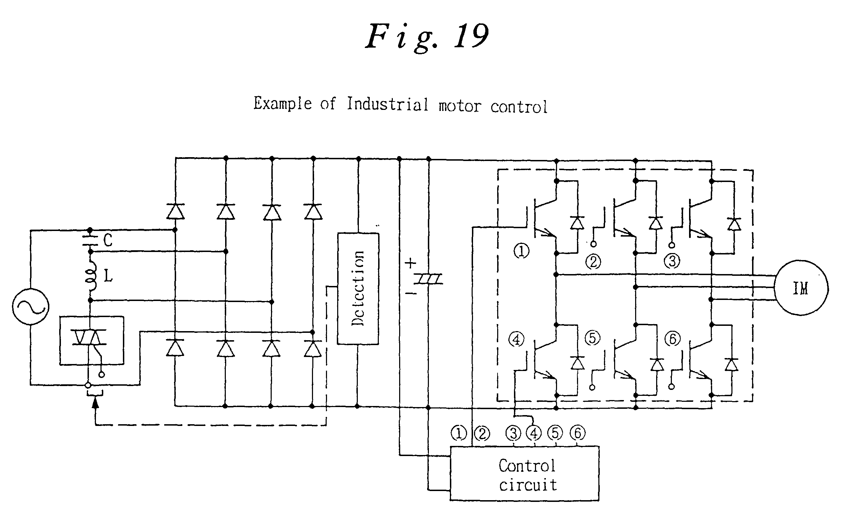

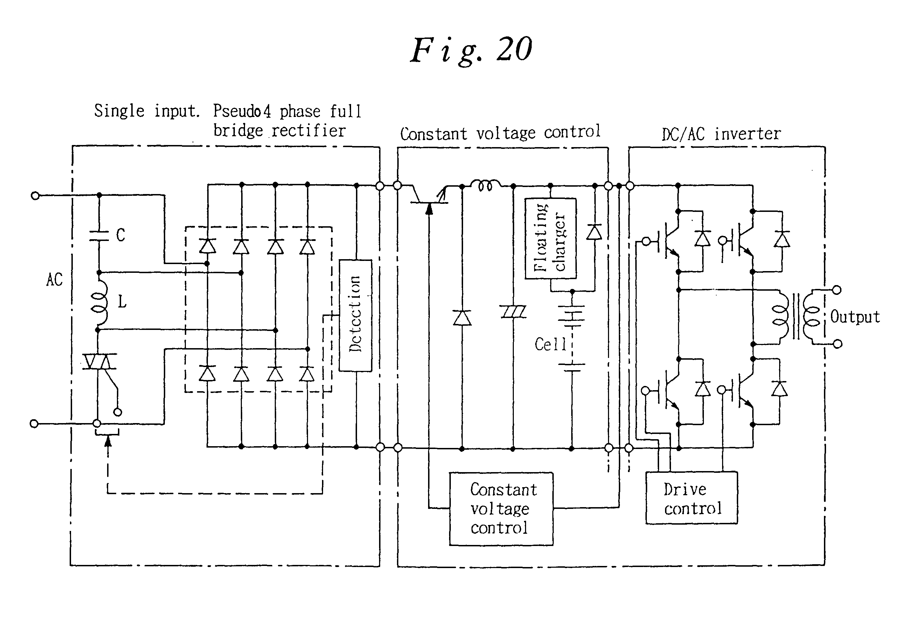

Fig.19 and Fig.20 shows example configurations when the actual example of the invented Single phase input-Pseudo four phase full bridge rectifier circuit is incorporated into the rectifier part of a DC-AC inverter which produces 3 phase or single phase AC output.

In particular, better conversion efficiency than a single phase full bridge rectifier is given by using single phase input. That is, energy saving, high power factor and operation with little power line harmonic energy are possible.

Of course, this invention may be used in many cases not only in the above examples. Though the concrete example is not shown here, for example, it is possible to constitute for economy a single phase input 4 phase full-bridge rectifier circuit which can realize the characteristics of an unbalanced 3 phase AC full bridge rectifier having an inferior waveform to a full bridge rectified waveform of a normal 3 phase AC input connected with a choke coil, a capacitor and 3 phase full bridge rectifier elements or 4 phase full bridge rectifier elements, whose value is away from the best value depending on the load of output terminals.

It is also possible to constitute a single phase input 4 phase full bridge rectifier circuit having a mechanism to cut off the above invented capacitor or choke coil circuit corresponding to shutting down the main load circuits without partial function circuit, when the main load is in an idle condition.

The invented Single phase input-Pseudo four phase full bridge rectifier circuit makes DC conversion with little harmonic component possible by using 4 phase full bridge rectifier circuit, and it is also possible to obtain equivalent conversion efficiency to a 3 phase AC circuit. 10% reduction of power consumption is possible compared with the conventional circuit, and 90~98% power factor is maintained. Furthermore, harmonic component to the AC input power supply side is extremely reduced.

By using a bidirectional semiconductor phase control element, and a variable inductance plus fixed choke coil configuration, it makes a choke coil small and lightweight. And, constant voltage control can be given by using a triac as a bidirectional semiconductor phase control element.

Moreover, it can give a single phase input 3 phase full bridge rectifier circuit and a single phase input pseudo 4 phase full bridge rectifier circuit which have a little increase of cost and a wide power capacity range.

It is possible to supply equivalently 3 phase AC power or 3 phase full bridge rectified power from a single phase AC input circuit by using this invention and possible to operate them.

**Claims**

1. A bridge rectifier circuit comprising a pair of a.c. input terminals for receiving a single phase a.c. input voltage, a pair of d.c. output terminals for supplying a d.c. output voltage derived from the a.c. input voltage to a load connected to the d.c. output terminals, a series circuit connected between said a.c. input terminals and comprising at least a capacitor and an inductor connected together in series at a third terminal, and a four-phase full bridge rectifier, said a.c. input terminals and said third terminal being connected to inputs of said bridge rectifier and said d.c. output terminals being connected to outputs of said bridge rectifier, **characterised in that** said series circuit additionally comprises a bidirectional semiconductor switch connected at one end to one of said a.c. input terminals and at the other end to said inductor at a fourth terminal, said fourth terminal being additionally connected to an input of said bridge rectifier, wherein the four phase full bridge rectifier and semiconductor switch form a pseudo-four phase full bridge rectifier.

2. A bridge rectifier circuit as claimed in claim 1, comprising a DC output voltage or current detecting means, and a phase angle controlling means for said bi-directional semiconductor switch, wherein the DC output voltage or current detecting means, phase angle controlling means and semiconductor switch form a control loop for controlling the output voltage, and the values of the capacitor and inductor are selected to correspond to the DC load resistance value of the DC output terminal of the four phase full bridge rectifier, and the phase angle of the bi-directional semiconductor switch is varied in accordance with a variation of DC output voltage or DC output load current.

**3.** A bridge rectifier circuit as claimed in claim 2, wherein a DC-DC converter is provided as a DC load resistance.

**4.** A bridge rectifier circuit as claimed in claim 2, wherein a DC-AC inverter is provided as a DC load resistance.

**5.** A bridge rectifier circuit as claimed in claim 2, 3 or 4, wherein maximum DC output voltage is controlled to be equal to maximum AC input voltage by both said phase angle controlling means and said control loop.

**6.** A bridge rectifier circuit as claimed in claim 2, 3, 4 or 5, wherein a triac is provided as said bi-directional semiconductor switch.

**7.** A bridge rectifier circuit as claimed in any one of claims 2 to 6, wherein values of the inductor and capacitor are adjusted to one that deviates from an optimum inductance and capacitance.

**Patentansprüche**

**1.** Brückengleichrichterschaltung, umfassend ein Paar Wechselstromeingangsanschlüsse zum Empfang einer Einphasenwechselstromeingangsspannung, ein Paar Gleichstromausgangsanschlüsse zum Zuführen einer aus der Wechselstromeingangsspannung abgeleiteten Gleichstromausgangsspannung zu einer an die Gleichstromausgangsanschlüsse angeschlossenen Last, eine Reihenschaltung, die zwischen den Wechselstromeingangsanschlüssen angeschlossen ist und mindestens einen Kondensator und einen Induktor umfasst, die an einem dritten Anschluss in Reihe zusammengeschaltet sind, und einen Vierphasenvollbrückengleichrichter, wobei die Wechselstromeingangsanschlüsse und der dritte Anschluss mit Eingängen des Brückengleichrichters verbunden sind und die Gleichstromausgangsanschlüsse mit Ausgängen des Brückengleichrichters verbunden sind, **dadurch gekennzeichnet, dass** die Reihenschaltung außerdem einen bidirektionalen Halbleiterschalter umfasst, der an einem Ende mit einem von den Wechselstromeingangsanschlüssen und am anderen Ende mit einem vierten Anschluss mit dem Induktor verbunden ist, wobei der vierte Anschluss außerdem mit einem Eingang des Brückengleichrichters verbunden ist, wobei der Vierphasenvollbrückengleichrichter und Halbleiterschalter einen Pseudovierphasenvollbrückengleichrichter bilden.

**2.** Brückengleichrichterschaltung nach Anspruch 1, umfassend eine Gleichstromausgangsspannungs- oder -stromdetektionseinrichtung und eine Phasenwinkelsteuereinrichtung für den bidirektionalen Halbleiterschalter, wobei die Gleichstromausgangsspannungs- oder -stromdetektionseinrichtung, die Phasenwinkelsteuereinrichtung und der Halbleiterschalter eine Regelschleife zum Regeln der Ausgangsspannung bilden und die Werte des Kondensators und Induktors so gewählt sind, dass sie dem Gleichstromlastwiderstandswert des Gleichstromausgangsanschlusses des Vierphasenvollbrückengleichrichters entsprechen, und der Phasenwinkel des bidirektionalen Halbleiterschalters in Übereinstimmung mit einer Veränderung der Gleichstromausgangsspannung oder des Gleichstromausgangslaststroms verändert wird.

**3.** Bückengleichrichterschaltung nach Anspruch 2, bei der als Gleichstromlastwiderstand ein Gleichstromwandler vorgesehen ist.

**4.** Brückengleichrichterschaltung nach Anspruch 2, bei der als Gleichstromlastwiderstand ein Wechselrichter vorgesehen ist.

**5.** Brückengleichrichterschaltung nach Anspruch 2, 3 oder 4, bei der eine maximale Gleichstromausgangsspannung sowohl durch die Phasenwinkelsteuereinrichtung als auch die Regelschleife so gesteuert wird, dass sie gleich einer maximalen Wechselstromeingangsspannung ist.

**6.** Brückengleichrichterschaltung nach Anspruch 2, 3, 4 oder 5, bei der als der bidirektionale Halbleiterschalter ein Triac vorgesehen ist.

**7.** Brückengleichrichterschaltung nach einem der Ansprüche 2 bis 6, bei der Werte des Induktors und Kondensators auf einen Wert eingestellt werden, der von einer optimalen Induktivität oder Kapazität abweicht.

**EP 0 696 838 B1**

**Revendications**

1. Circuit redresseur en pont comprenant une paire de bornes d'entrée à courant alternatif destinées à recevoir une tension d'entrée alternative monophasée, une paire de bornes de sortie à courant continu destinées à fournir une tension de sortie continue dérivée de la tension d'entrée alternative à une charge connectée aux bornes de sortie à courant continu, un circuit série connecté entre lesdites bornes d'entrée à courant continu et comprenant au moins un condensateur et une bobine d'inductance connectés ensemble en série au niveau d'une troisième borne, et un redresseur en pont pleine onde quadriphasé, lesdites bornes de sortie à courant alternatif et ladite troisième borne étant connectées aux entrées dudit redresseur en pont et lesdites bornes de sortie à courant continu étant connectées aux sorties dudit redresseur en pont, **caractérisé en ce que** ledit circuit série comprend en outre un interrupteur à semiconducteur bidirectionnel connecté, à une extrémité, à l'une desdites bornes d'entrée à courant alternatif et, à l'autre extrémité, à ladite bobine d'inductance au niveau d'une quatrième borne, ladite quatrième borne étant en outre connectée à une entrée dudit redresseur en pont, dans lequel le redresseur en pont pleine onde quadriphasé et l'interrupteur à semiconducteur forment un redresseur en pont pleine onde pseudo-quadriphasé.

2. Circuit redresseur en pont selon la revendication 1, comprenant un moyen de détection de tension ou de courant de sortie continu(e), et un moyen de commande d'angle de phase pour ledit interrupteur à semiconducteur bidirectionnel, dans lequel le moyen de détection de tension ou de courant de sortie continu(e), le moyen de commande d'angle de phase et l'interrupteur à semiconducteur forment une boucle de régulation destinée à réguler la tension de sortie, et les valeurs du condensateur et de la bobine d'inductance sont sélectionnées de manière à correspondre à la valeur de la résistance de la charge à courant continu de la borne de sortie à courant continu du redresseur en pont pleine onde quadriphasé, et on fait varier l'angle de phase de l'interrupteur à semiconducteur bidirectionnel conformément à une variation de la tension de sortie continue ou du courant de charge de sortie continu.

3. Circuit redresseur en pont selon la revendication 2, dans lequel on prévoit un convertisseur continu-continu comme résistance de charge à courant continu.

4. Circuit redresseur en pont selon la revendication 2, dans lequel on prévoit un onduleur continu-alternatif comme résistance de charge à courant continu.

5. Circuit redresseur en pont selon la revendication 2, 3 ou 4, dans lequel la tension de sortie continue maximale est régulée pour être égale à la tension d'entrée alternative maximale à la fois par ledit moyen de commande d'angle de phase et ladite boucle de régulation.

6. Circuit redresseur en pont selon la revendication 2, 3, 4 -ou 5, dans lequel on prévoit un triac comme ledit interrupteur à semiconducteur bidirectionnel.

7. Circuit redresseur en pont selon l'une quelconque des revendication 2 à 6, dans lequel les valeurs de la bobine d'inductance et du condensateur sont ajustées sur une valeur qui s'écarte d'une d'inductance et d'une capacité optimales.

F i g . 1

Fig.2

| | Circuit | Cost | Effi-ciency | Power factor | Power Supply Harmonics |
|---|---|---|---|---|---|
| (1) Choke coil input | Choke coil ... DC-DC Converter | ◎ | ○ | × | △ |
| (2) One transister Converter | ... PWM Control | ○ | △ | ○ | △ |
| (3) Active filter | ... DC-DC Converter ... PWM Control | × | △ | ◎ | ○ |

◎ ; Excellent  ○ ; Good  △ ; Reasonable  × ; Bad

EP 0 696 838 B1

## F i g. 3

## Fig. 4

Power factor (vertical axis): 0.5, 0.6, 0.7, 0.8, 0.9, 1.0

- Active filter ④
- One transistor converter ③ → Power up
- Improving of power factor
- Minimum limit of regulation
- Choke coil input ②
- Improving of power factor
- Improving of power factor
- Conventional switching power supply ①

Power consumption (W): 10, 30, 50, 75, 100, 300, 500, 1K, 3K

EP 0 696 838 B1

## F i g. 5

## F i g. 6

(A) Single phase AC circuit

$e_1 = R_1 i_1$

$P_{AC} = e_1 \cdot i_1$

Vector diagram

## F i g. 7

(B) Single phase full bridge rectifier circuit

$\frac{2}{\pi} i_1$

$I_1 = \frac{2\sqrt{2}}{\pi} i_1 \fallingdotseq 0.9 i_1$

$e_1 = i_1 R_1$

$E_1 = \frac{2\sqrt{2}}{\pi} e_1 \fallingdotseq 0.9 e_1$

$= R_1 i_1$

$P_{AC} = e_1 i_1, \quad P_{DC} = E_1 I_1 = \frac{8}{\pi^2} e_1 i_1 \fallingdotseq 0.81 e_1 i_1$

$\therefore P_{DC}/P_{AC} = 0.81$

$$F i g. 8$$

(C) Single phase→3 phase conversion

**F i g. 9A**

4 phase bridge

Capacitor ①

Choke coil ③

④

Semiconductor switch ②

Voltage detection

DC-DC Converter

phase controlled/on-off control

**F I G. 9B**

L C

Semiconductor switch

Voltage detection

DC-DC Converter

# F i g. 1 0

phase controlled/on-off control

Semiconductor switch

(2)

(4)

Choke coil

(3)

①

Capacitor

4 phase bridge

Voltage detection

+

DC-DC Converter

# F i g . 1 1

(1) Fixed choke coil (L)

A o—$\overset{i_L}{\longrightarrow}$——⌇⌇⌇⌇——————o B

⇩

(2) Partially variable inductance

A o—$\overset{i_L}{\longrightarrow}$—⌇⌇——⌇⌇——————o B

Variable ₙ fixed

⇩

(3) Partially replaced
with controlled reactor

A o—$\overset{i_L}{\longrightarrow}$————⌇⌇———o B

fixed

Control input

⇩

(4) Triac+fixed inductance

A o—$\overset{i_L}{\longrightarrow}$————⌇⌇———o B

Phase controlled fixed

⇩

(5) Thyristor+diode bridge
+fixed inductance

A o—$\overset{i_L}{\longrightarrow}$————⌇⌇———o B

fixed

Phase controlled

⇩

(6) Transistor+diode bridge
+fixed inductance

A o—$\overset{i_L}{\longrightarrow}$————⌇⌇———o B

fixed L

High speed pulse width control

# $Fig. 12$

Single phase input 3 phase full bridge rectifier circuit

$$i_7 = \sqrt{3}\, i_6 = \frac{8\, i_1}{3\, \pi} \fallingdotseq 0.85\, i_1 \qquad I_3 = \frac{2}{3} I_1 = \frac{4\sqrt{2}}{3\, \pi}\, i_1$$

$$R_3 = \left(\frac{3}{2}\right)^2 R_1$$

$$E_3 = \frac{3\sqrt{2}}{\pi} e_1 = \frac{3}{2} E_1$$

$$E_3 I_3 = E_1 \cdot I_1$$

$$i_8 = i_0 \qquad \left(i_6 = \sqrt{2}\, i_5 = \frac{8\, i_1}{3\sqrt{3}\,\pi}\right. \qquad i_5 = \frac{I_3}{\sqrt{3}} = \frac{2 I_1}{3\sqrt{3}} = \frac{4\sqrt{2}\, i_1}{3\sqrt{3}\,\pi}$$

$$= \frac{i_7}{\sqrt{3}} = i_6 \fallingdotseq 0.49\, i_1 \qquad\qquad \fallingdotseq 0.346\, i_1$$

$$P_{AC} = e_1 \cdot i_7 = e_1 \cdot 0.85\, i_1 = 0.85\, e_1 \cdot i_1$$

$$P_{DC} = E_3 \cdot I_3 = \left(\frac{3\sqrt{2}}{\pi} \cdot e_1\right)\left(\frac{4\sqrt{2}}{3\, \pi} \cdot i_1\right) = \frac{8\, e_1 \cdot i_1}{\pi^2}$$

$$= 0.81\, e_1 \cdot i_1$$

$$\therefore\ \ P_{DC}/P_{AC} = 0.953$$

$$L_2 = \frac{e_1}{2\,\pi\, f\, i_8} = \frac{e_1}{(2\,\pi\, f)(0.49\, i_1)} \ \cdots (H)$$

$$C_2 = \frac{0.49\, i_1 \cdot 10^6}{2\,\pi\, f\, e_1} \ -------(\mu F)$$

## F i g . 1 3

<1> (input voltage)
$e_1 = 100^V$

<2> Choke coil voltage
$e_L$

<3> Capacitor voltage
$e_C$

<4> DC output voltage $E_3$

<5> (input current)
1A $I_7$

<6> Choke coil current
1A
$I_8$

<7> Capacitor current
1A
$I_9$

<8> DC output current
1A $I_3$

## *F i g. 1 4*

load resistance=225 Ω  C=14. 6 μF  L=650mH

E₃    ⟨9⟩

load resistance 248 Ω(+10%), L. C. same condition

⟨10⟩

load resistance 203 Ω(−10%), L. C. same condition

⟨11⟩

*Fig. 15*

| | Circuit | AC (V) | AC (A) | AC (VA) | DC (V) | DC (A) | DC (W) | Pf·$\eta$ (%) |
|---|---|---|---|---|---|---|---|---|
| Capacitor input type | 222 Ω | 102 | 1.22 | 124.4 | 137 | 0.62 | 85.0 | 68.3 |
| Choke coil input type | 222 Ω | 102 | 0.88 | 89.8 | 110 | 0.5 | 55 | 61.2 |
| Single phase full bridge | 100 Ω | 102 | 1.0 | 102 | 90 | 0.90 | 81 | 79.4 |
| Single input 3 phase full bridge | 222 Ω | 102 | 0.85 | 86.7 | 136 | 0.62 | 84 | 96.9 |

Pf·$\eta$ = DC(W)/AC(VA)

# *Fig. 16*

| | Circuit | A C (V) | A C (A) | A C (VA) | D C (V) | D C (A) | D C (VA) | Pf·$\eta$ (%) |
|---|---|---|---|---|---|---|---|---|
| Single input pseudo 4 phase full bridge rectifier | C=14~110$\mu$ | 102 ⌇ 102 | 0.95 ⌇ 8.5 | 96.9 ⌇ 867 | 136 ⌇ 136 | 0.62 ⌇ 5.9 | 84 ⌇ 804 | 86.7 ⌇ 92.7 |

Pf·$\eta$ = DC(W)/AC(VA)

Fig. 17A

*Fig. 17B*

# Fig. 18A

(1) Load non-insulated method

# Fig. 18B

(2) Load insulated DC/DC converter

# Fig. 18C

(3) Induction heating type cooking apparatus

AC 100V

C

L

Detection

Controller

EP 0 696 838 B1

# Fig. 19

Example of Industrial motor control

*F i g. 20*

Single input. Pseudo4 phase full
bridge rectifier

Constant voltage control

DC/AC inverter

Output

Drive control

Floating charger

Cell

Constant voltage control

Detection

AC

C

L